# EUROPÄISCHE PATENTSCHRIFT

(11) **EP 3 012 934 B1**
(45) Veröffentlichungstag und Bekanntmachung des Hinweises auf die Patenterteilung: **23.05.2018**
(21) Anmeldenummer: 15188054.9
(22) Anmeldetag: 02.10.2015
(51) Int. Cl.: H02G 15/00, H02G 3/06

(54) **PASSSTÜCK ZUR LAGESICHEREN EINFÜHRUNG VON ELEKTROKABELN IN ROHRE**
ADJUSTING PIECE FOR THE SAFE INTRODUCTION OF ELECTRIC CABLES INTO PIPES
PIECE ADAPTEE DESTINE A L'INTRODUCTION FIABLE DE CABLES ELECTRIQUES DANS DES TUYAUX

(30) Priorität: 02.10.2014 AT 7432014
(43) Veröffentlichungstag der Anmeldung: 27.04.2016
(73) Patentinhaber: Jannach, Helmut, 8045 Graz (AT)
(72) Erfinder: Jannach, Helmut, 8045 Graz (AT); Kriegl, Maximilian, 8074 Raaba (AT)
(74) Vertreter: Puchberger & Partner Patentanwälte

(56) Entgegenhaltungen:
- WO-A1-2007/042654
- CH-A- 520 287
- JP-A- H08 148 201
- US-A- 3 118 696
- US-A1- 2014 069 904
- "Cable prorection Systems - HellermannTyton", , 30. April 2011 (2011-04-30), XP055241067, Gefunden im Internet: URL:http://files.voelkner.de/525000-549999 /541869-da-01-en-KNICKSCHUTZ_TUELLEN_HV_21 01.pdf [gefunden am 2016-01-13]

## Beschreibung

Die Erfindung bezieht sich auf ein Passstück zur lagesicheren Einführung von Elektrokabeln in Rohre als Schutz vor Beschädigung bei der Befestigung der Rohre, wobei das Passstück einen einzigen in Längsrichtung verlaufenden Kanal aufweist. Wenn Rohre, in welchen Elektrokabeln eingeführt sind, dadurch an Trägern befestigt werden sollen, dass Schrauben oder andere bolzenförmige Befestigungsmittel durch das Rohr quer zur Achse durchgeführt werden müssen, dann besteht üblicherweise die Gefahr, dass beim Durchbohren der Rohre bzw. dann, wenn die Rohre vorgebohrt sind, beim Einführen der Schraube, dass die Kabeln durch die Bohrwerkzeuge bzw. die Befestigungsmittel beschädigt werden bzw. an diesen scheuern. Dies kann dann zu elektrischen Kurzschlüssen mit allen Folgeerscheinungen führen.
Ein Passstück der eingangs genannten Art ist der WO 2007/042654 A1 zu entnehmen. Allerdings ist der Druckschrift nicht zu entnehmen, wie eine Befestigung des Passstücks im Rohr erfolgen soll. Weiters wird das Kabel nur entlang der Oberfläche des Passstücks geführt, sodass an der Mündungskante des Rohres eine Verletzung des Kabels möglich ist.
Weiters sind Kabelklemmen aus der CH 520 287 A und JP H08148201 A als Stand der Technik bekannt geworden. Der Hellermanntyton Produktkatalog (Knickschutz Tuellen HV 2011) offenbart Passstücke (siehe Produkten HV2101, HV2107, HV2101A, HV2209). Der Erfindung liegt die Aufgabe zu Grunde ein Passstück der eingangs genannten Art zu schaffen, mit welchem das Kabel im Bereich des Rohrendes sicher gehalten und von der Rohrmitte ferngehalten wird, um solcherart die Anbringung der Querbohrungen bzw. das Einführen von Haltemittel entsprechend zu erleichtern.
Erfindungsgemäß wird diese Aufgabe dadurch gelöst, dass das Passstück als in die Rohrmündung einzusetzender Stopfen ausgebildet ist, in dessen Mantel ein in Längsrichtung verlaufender Kanal zur Aufnahme des Elektrokabels vorgesehen ist, wobei zur Befestigung des Rohrendes eine Querbohrung durch die Rohrwandung und den Stopfen im Bereich der Rohrmitte vorgesehen ist. Damit wird erreicht, dass im Bereich der Rohrmitte immer ein vom Elektrokabel freier Bereich vorhanden ist, in welchem eine sichere Verbindung des Rohres mit einem Träger ermöglicht ist.
Vorteilhafterweise kann die Querbohrung etwa parallel zur Tangente im Bereich des Kanals verlaufen. Damit wird erreicht, dass der größtmögliche Bereich für die Anbringung der Querbohrung vorliegt. Weiters kann der Kanal durch einen entlang einer Erzeugenden des Stopfen geführten Einschnitt gebildet sein, wodurch erreicht wird, dass bei Einführen des Stopfens in das Rohrende eine gewisse Verengung des Kanals erfolgt, womit eine Kabelklemmung (Zugentlastung) erzielt ist.

Dabei kann der Einschnitt im Bereich des nach außen weisenden Endes des Stopfen, insbesondere unter Querschnittsverengung, nach innen vorzugsweise bis zur Stopfenmitte geführt sein, womit verhindert ist, dass das Kabel am Rand der Rohrmündung scheuert. Schließlich kann das nach außenweisende Ende des Stopfens radial über den Außenumfang des Rohrendes vorspringen, womit erreicht ist, dass ein zusätzlicher Schutz gegen Durchscheueren der Isolation am Kabelaustritt an eventuellen Metallteilen erfolgt.

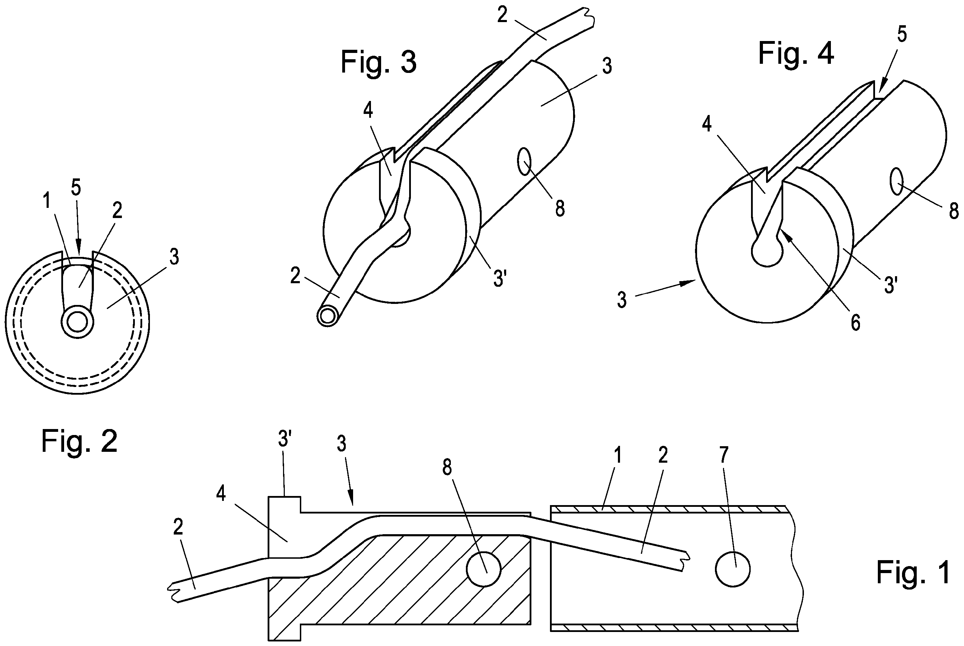

Fig. 1 zeigt das erfindungsgemäße Passstück vor dem Einschieben in das Rohr.
Fig. 2 gibt eine Stirnansicht des Passstückes in Fig. 1 von links gesehen wieder.
Fig. 3 zeigt das Passstück schaubildlich mit eingelegtem Elektrokabel.
Fig. 4 zeigt das Passstück als solches ohne Kabel im Schaubild.

Mit 1 ist ein Rohr bezeichnet, in welches ein elektrisches Heizkabel 2 einzuführen ist, wobei das Rohr an einem Träger mittels Schrauben zu befestigen ist. Dazu ist ein Passstück 3 vorgesehen, welches eine mit Seitenflanken 4 versehene Ausnehmung 5 aufweist, wobei die Seitenflanken zum Mittelpunkt hin, wie bei 6 dargestellt, konvergieren. Das Heizkabel 2 wird in diese Ausnehmung 5 eingelegt, wobei durch das Einsetzen des Passstückes 3 in das Rohr 1 ein Klemmdruck auf das Kabel 2 erfolgt.

Das Passstück 3 weist an seinem zur Anlage an die Mündung des Rohres 1 gedachten Ende einen Flansch 3' auf, mit welchem die Einschubbewegung des Passstückes 3 in das Rohr 1 begrenzt ist. Im Bereich dieses Flansches und dem daran anschließenden Teil des Passstückes ist die Ausnehmung 5 zur Mitte des Rohres hin geführt, womit das Heizkabel von der scharfen Kante des Rohres entfernt gehalten wird.

Zur Befestigung des Rohres an einem Träger weist das Rohr eine Bohrung 7 und das Passstück eine Bohrung 8 auf, die bei eingeschobenem Passstück in das Rohr koaxial zu liegen kommen. Diese Bohrungen können jedoch auch erst bei eingesetztem Passstück durch das Rohr vorgenommen werden, da hierbei keinerlei Gefahr besteht, durch den Bohrvorgang das Elektroheizkabel 2 zu beschädigen.

Es ist damit eine sichere Kabeleinführung am Rohr gegeben, wobei das Kabel sowohl von einer scharfen Mündungskante als auch vom Befestigungsorganen ferngehalten ist.

## Patentansprüche

1. Passstück zur lagesicheren Einführung von Elektrokabeln in Rohre als Schutz vor Beschädigung bei der Befestigung der Rohre, wobei das Passstück einen einzigen in Längsrichtung verlaufenden Kanal aufweist, wobei das Passstück (3) als in die Rohrmündung einzusetzender Stopfen ausgebildet ist, in dessen Mantel der in Längsrichtung verlaufende Kanal (5) zur Aufnahme des Elektrokabels (2) vorgesehen ist, **dadurch gekennzeichnet, dass** zur Befestigung des Rohrendes eine Querbohrung (8) durch die Rohrwandung und den Stopfen im Bereich der Rohrmitte vorgesehen ist.

2. Passstück nach Anspruch 1, **dadurch gekennzeichnet, dass** die Querbohrung (8) etwa parallel zur Tangente im Bereich des Kanals (4/5) verläuft.

3. Passstück nach Anspruch 1 oder 2, **dadurch gekennzeichnet dass** der Kanal 4 (5) durch einen entlang einer Erzeugenden des Stopfen (3) geführten Einschnitt gebildet ist.

4. Passstück nach Anspruch 3, **dadurch gekennzeichnet, dass** der Einschnitt im Bereich der nach außen weisenden Endes des Stopfens (3), insbesondere unter Querschnittsverengung, nach innen, vorzugsweise bis zur Stopfenmitte, geführt ist.

5. Passstück nach einem der Ansprüche 1 bis 4, **dadurch gekennzeichnet, dass** das nach außen weisende Ende des Stopfens (3) radial über den Außenumfang des Rohrendes vorspringt.

## Claims

1. Adjusting piece for the positionally secure introduction of electric cables into pipes as protection against damage when fixing the pipes, wherein the adjusting piece has a single channel running in the longitudinal direction, wherein the adjusting piece (3) is designed as a stopper to be inserted into the pipe opening, and the channel (5) running in the longitudinal direction for receiving the electric cable (2) is provided in the jacket of said stopper,
**characterized in that**
in order to fix the pipe end, a cross hole (8) is provided through the pipe wall and the stopper in the region of the centre of the pipe.

2. Adjusting piece according to Claim 1,
**characterized in that**
the cross hole (8) extends approximately parallel to the tangent in the region of the channel (4/5).

3. Adjusting piece according to Claim 1 or 2,
**characterized in that**
the channel (4/5) is formed by an incision which is routed along a generatrix of the stopper (3).

4. Adjusting piece according to Claim 3,
**characterized in that**
in the region of the outward facing end of the stopper (3), the incision is routed inwards, in particular by narrowing the cross-section, and preferably as far as the centre of the stopper.

5. Adjusting piece according to any one of Claims 1 to 4,
**characterized in that**
the outward facing end of the stopper (3) projects radially over the outer circumference of the pipe end.

## Revendications

1. Pièce d'adaptation pour introduction en position sûre de câbles électriques dans des tubes en tant que protection contre l'endommagement lors de la fixation des tubes, la pièce d'adaptation comportant un conduit unique passant dans le sens longitudinal, la pièce d'adaptation (3) étant constituée en tant que bouchon à insérer dans l'embouchure de tube, dans l'enveloppe duquel le conduit (5) passant dans le sens longitudinal est prévu pour recevoir le câble électrique (2), **caractérisée en ce que** pour fixer l'extrémité de tube un trou transversal (8) est prévu à travers la paroi tubulaire et le bouchon dans la zone du centre du tube.

2. Pièce d'adaptation selon la revendication 1, **caractérisée en ce que** le trou transversal (8) passe à peu près parallèlement à la tangente dans la zone du conduit (4/5).

3. Pièce d'adaptation selon la revendication 1 ou 2, **caractérisée en ce que** le conduit (4/5) est formé par une entaille passant le long d'une génératrice du bouchon (3).

4. Pièce d'adaptation selon la revendication 3, **caractérisée en ce que** l'entaille dans la zone de l'extrémité du bouchon (3) tournée vers l'extérieur, notamment sous un rétrécissement de section transversale, est dirigée vers l'intérieur, de préférence jusqu'au centre du bouchon.

5. Pièce d'adaptation selon l'une quelconque des revendications 1 à 4, **caractérisée en ce que** l'extrémité du bouchon (3) tournée vers l'extérieur ressort radialement sur la périphérie extérieure de l'extrémité du tube.
